# FASCICULE DE BREVET EUROPEEN

(11) **EP 1 726 463 B1**
(45) Date de publication et mention de la délivrance du brevet: **11.03.2009**
(21) Numéro de dépôt: 06009324.2
(22) Date de dépôt: 05.05.2006
(51) Int. Cl.: B60H 1/00

(54) **Couvercle pour conduits d'appareils de chauffage, ventilation et refroidissement de l'air dans les habitacles de véhicules**
Deckel für Leitungen von Geräten zur Heizung, Belüftung und Kühlung der Kraftfahrzeuginnenraumluft
Cover for hoses of devices for heating, ventilating and cooling vehicle's cabin air

(30) Priorité: 26.05.2005 IT MI20050977
(43) Date de publication de la demande: 29.11.2006
(73) Titulaire: Valeo Sistemi Di Climatizzazione S.p.A., 0313 Ferentino (IT)
(72) Inventeur: Solinas, Giampiero, 10146 Torino (IT); Alessio, Maurizio, 10146 Torino (IT)
(74) Mandataire: Léveillé, Christophe

(56) Documents cités:
- DE-A1- 10 240 911
- FR-A- 2 772 120
- US-A1- 2004 154 326

## Description

La présente invention concerne un couvercle pour conduits d'appareils de chauffage, de ventilation et de refroidissement de l'air dans les habitacles de véhicules, en particulier de véhicules automobiles.

Les appareils de chauffage, de ventilation et de refroidissement connus pour véhicules automobiles comprennent au moins deux paires de conduits qui sont reliés respectivement à l'échangeur de chaleur pour le chauffage de l'air et à l'évaporateur pour le refroidissement de l'air. Les extrémités libres de ces conduits ressortent à l'extérieur des appareils pour être reliées aux circuits de refroidissement du moteur et de conditionnement de l'air, c'est pourquoi elles restent découvertes sur un tronçon plus ou moins long. En cas de fuites ou de formation de condensation, les conduits peuvent libérer des fluides qui se dispersent de manière incontrôlée dans l'habitacle du véhicule automobile, par exemple sous le tableau de bord, avec un risque consécutif de pannes. Pour résoudre cet inconvénient, le document DE 102 40 911, qui est considéré comme l'art antérieur le plus proche, divulgue des tubes permettant de recouvrir ces conduits. Cependant, ces tubes sont difficiles à réaliser et à installer, à cause de la forme et de la disposition de ces derniers. En outre, il est difficile de maintenir les extrémités libres des conduits en position pendant leur raccordement auxdits circuits.

Le but de la présente invention est donc de venir à bout desdits problèmes techniques. Ledit objectif est atteint avec un couvercle dont les caractéristiques principales sont spécifiées dans la première revendication et d'autres caractéristiques sont spécifiées dans les revendications suivantes.

De façon plus détaillée, ce couvercle comprend une première calotte qui présente une forme concave en mesure de loger au moins partiellement les conduits d'un échangeur de chaleur dudit appareil et est reliée à une seconde calotte qui a une forme concave, pour loger au moins partiellement les conduits d'un évaporateur du même appareil, ladite première et/ou seconde calotte étant dotées de moyens de couplage hermétique avec des parties de l'appareil pour contenir les fluides qui peuvent être libérés par ces conduits.

Selon un aspect particulier de l'invention, lesdits moyens de couplage hermétique comprennent des profils façonnés qui sont disposés au moins le long du bord inférieur de la première et/ou de la seconde calotte et peuvent être insérés dans des cannelures complémentaires agencées dans le couvercle de l'échangeur de chaleur ou dans l'enveloppe dudit appareil. Ladite première calotte présente sensiblement une forme de T.

Selon un autre aspect particulier de l'invention, la partie transversale de la calotte en forme de T couvre les zones d'entrée et de sortie des conduits dans le couvercle de l'échangeur de chaleur, tandis que la partie longitudinale de la calotte en forme de T couvre une section externe des conduits et est inclinée vers le bas. La seconde calotte a, par contre, une forme allongée et sinueuse et son bord inférieur comprend un conduit de drainage.

Selon un autre aspect particulier de l'invention, un cache est fixé au dessus de la seconde calotte.

Selon un autre aspect particulier de l'invention, l'extrémité de la seconde calotte opposée à la première calotte est dotée d'un logement en mesure de loger au moins partiellement une soupape d'expansion disposée le long des conduits de l'évaporateur. Ledit logement est de préférence relié à une bride munie d'un gabarit, en mesure de maintenir les extrémités des conduits de l'échangeur de chaleur en position par rapport à la soupape d'expansion.

Selon un autre aspect particulier de l'invention, la première calotte, la seconde calotte et/ou le cache sont dotés de trous leur permettant d'être fixés au moyen de vis, au couvercle de l'échangeur de chaleur ou à d'autres parties de l'appareil. Un ou plusieurs de ces trous sont agencés dans des brides qui font saillie par la première calotte et/ou dans la première calotte dans des positions comprises entre les conduits de l'échangeur de chaleur.

Selon un autre aspect particulier de l'invention, la première calotte et la seconde calotte sont reliées par une plaque de raccordement. La première calotte, la seconde calotte, la plaque de raccordement, le cache et/ou le logement pour la soupape d'expansion sont de préférence réalisés en une seule pièce de matière plastique moulée.

Grâce à la forme et à la disposition particulières des deux calottes, ainsi qu'à leurs moyens de couplage hermétique, le couvercle selon la présente invention permet non seulement de fermer, de manière simple et rapide, les conduits d'un appareil de chauffage, de ventilation et/ou de refroidissement de l'air, mais également de drainer vers l'extérieur du véhicule automobile, les fluides libérés par ces conduits, de façon à prévenir les pannes possibles.

Le couvercle est de préférence dotée d'un cache qui, grâce à sa position, atténue efficacement le bruit généré par le dispositif de ventilation.

Le couvercle peut également être dotée d'un logement particulier pour maintenir dans une position correcte les extrémités des conduits, y compris une soupape d'expansion, pendant le branchement de l'appareil aux circuits du véhicule automobile.

En outre, le couvercle présente des formes particulières qui permettent la fabrication en une seule pièce de matière plastique moulée, afin de réduire les coûts et les temps de fabrication et de montage.

D'autres avantages et caractéristiques du couvercle selon la présente invention ressortiront plus clairement pour l'homme du métier, d'après la description suivante détaillée et non limitative d'une de ses formes de réalisation en référence aux dessins joints dans lesquels :

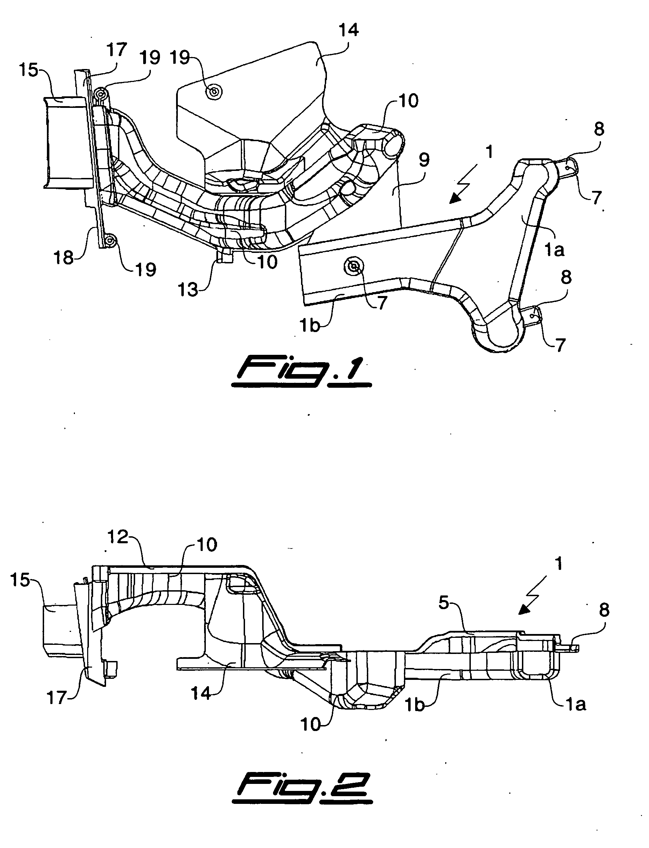

La figure 1 représente une vue latérale du couvercle;
La figure 2 représente une vue de dessus du couvercle de la figure 1;

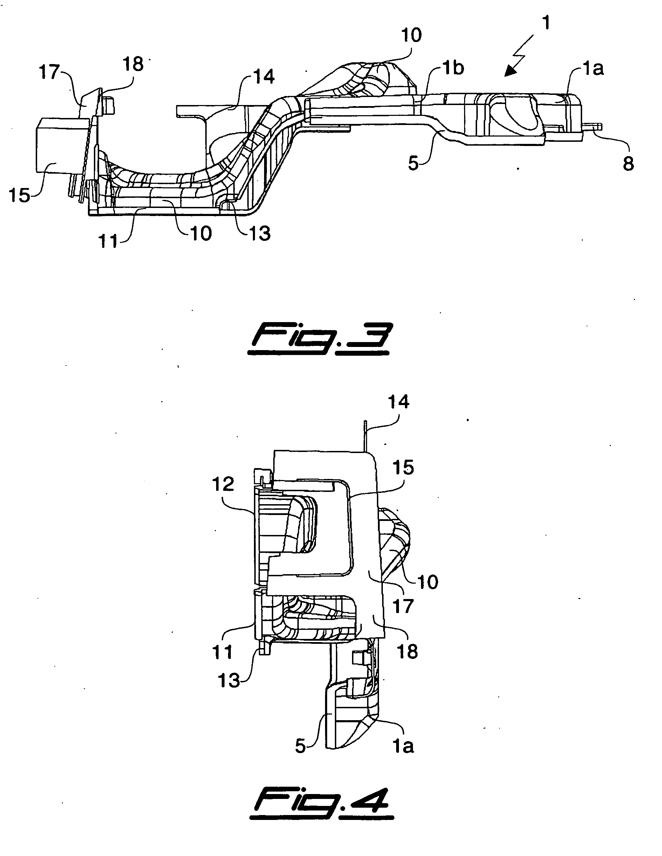

La figure 3 représente une vue de dessous du couvercle de la figure 1 ;
La figure 4 représente une vue de face du couvercle de la figure 1 ;

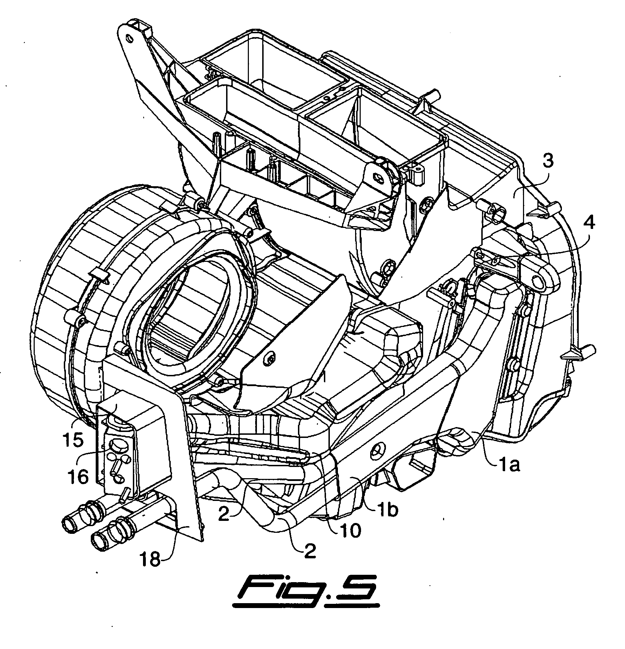

La figure 5 représente une vue en perspective d'un appareil de chauffage, de ventilation et de refroidissement d'un véhicule automobile comprenant le couvercle de la figure 1 ;

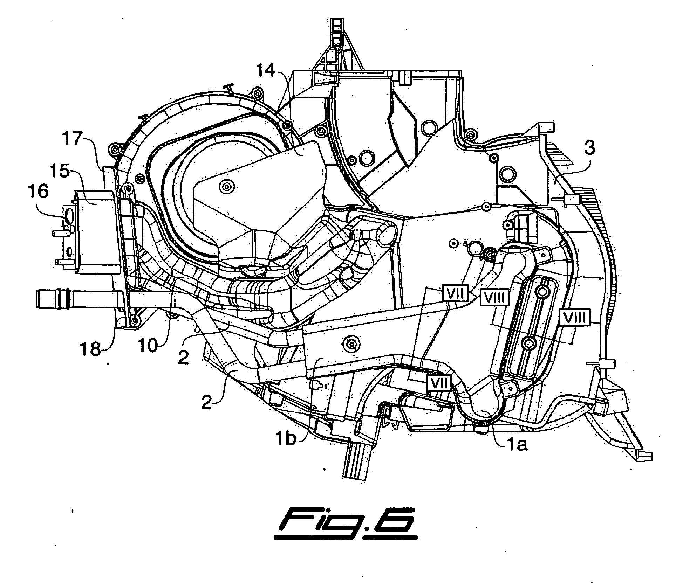

La figure 6 représente une vue latérale de l'appareil de la figure 5 ;

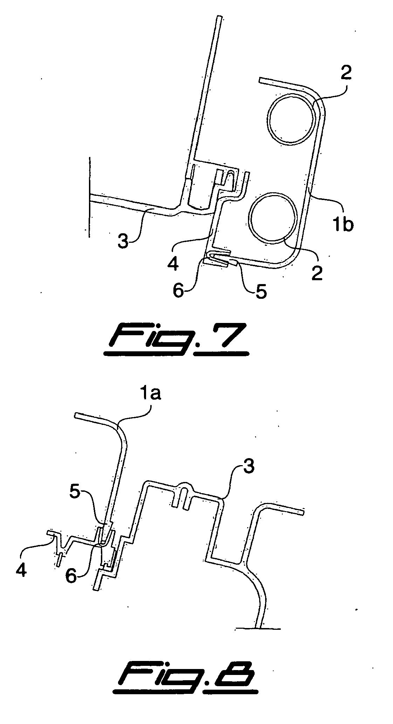

La figure 7 représente une vue schématique en coupe selon le plan VII-VII de la figure 6 ; et
La figure 8 représente une vue schématique en coupe selon le plan VIII-VIII de la figure 6.

En référence à ces figures, on voit que le couvercle selon la présente forme de réalisation de l'invention comprend une première calotte 1 ayant une forme concave, en mesure de loger au moins partiellement les conduits 2 d'entrée et de sortie d'un échangeur de chaleur pour le chauffage de l'air d'un appareil 3 de chauffage, ventilation et refroidissement, par exemple d'un véhicule automobile. En particulier, la première calotte 1 présente un profil sensiblement en forme de T, dont la partie transversale 1a couvre les zones d'entrée et de sortie des conduits 2 dans le couvercle 4 dudit échangeur de chaleur, tandis que la partie longitudinale 1b couvre une section externe des conduits 2 et est inclinée vers le bas pour décharger les éventuels fluides libérés par ces conduits.

Au moins le bord inférieur de la première calotte 1 est doté d'un profil façonné 5, en mesure d'être inséré dans une cannelure complémentaire 6, qui est agencée dans le couvercle 4 de l'échangeur de chaleur et est de préférence recouverte intérieurement d'un matériau élastomère, de façon à réaliser un couplage hermétique avec la première-calotte 1. La première calotte 1 est en outre dotée de trous 7 lui permettant d'être fixée avec des vis au couvercle 4 de l'échangeur de chaleur ou à d'autres parties de l'appareil 3. En particulier, un ou plusieurs trous 7 sont agencés dans des brides 8 qui font saillie par la partie transversale 1a de la première calotte 1 ou bien dans sa partie longitudinalelb dans des positions comprises entre les conduits 2.

La première calotte 1 est reliée par une plaque de raccordement 9, munie de nervures de renfort, à une seconde calotte 10, ayant une forme allongée et concave pour loger au moins partiellement les conduits d'entrée et de sortie (non visibles sur les figures) d'un évaporateur de l'appareil 3. La seconde calotte 10 a une forme sinueuse, avec la concavité orientée vers l'appareil 3. Au moins le bord inférieur de la seconde calotte 10 est muni d'un profil façonné 11, en mesure d'être inséré dans une cannelure complémentaire (non visible sur les figures) qui est agencée dans l'enveloppe de l'appareil 3 et est de préférence recouverte intérieurement avec un matériau élastomère, de façon à réaliser un couplage hermétique avec la seconde calotte 10. Le bord supérieur de la seconde calotte 10 peut également être doté d'un profil façonné 12 similaire ayant la même fonction. Le bord inférieur de la seconde calotte 10 comprend un conduit de drainage 13 pour évacuer la condensation susceptible de se former autour des conduits abrités dans cette calotte. Un cache 14 peut être fixé au dessus de la seconde calotte 10 pour atténuer le bruit généré par le dispositif de ventilation de l'appareil 3.

L'extrémité de la seconde calotte 10, opposée à la première calotte 1, est dotée d'un logement 15 en mesure de loger au moins partiellement une soupape d'expansion 16 disposée le long des conduits de l'évaporateur. Ce logement 15 est relié à une bride 17 munie d'un gabarit 18, en mesure de maintenir les extrémités des conduits 2 en position,par rapport à la soupape d'expansion 16. La seconde calotte 10 et/ou le cache 14 sont également dotés de trous 19 leur permettant d'être fixés au moyen de vis à l'appareil 3. Les calottes 1 et 10, la plaque de raccordement 9, le cache 14, le logement 15 et les autres éléments du couvercle sont réalisés en une seule pièce de matière plastique moulée.

D'éventuelles variantes et/ou ajouts peuvent être apportés par l'homme du métier à la forme de réalisation de l'invention décrite et illustrée ici, tout en restant dans le cadre de la présente invention.

## Revendications

1. Couvercle pour conduits (2) d'un appareil (3) de chauffage, ventilation et refroidissement d'air, **caractérisé en ce qu'**il comprend une première calotte (1), de forme concave, en mesure de loger au moins partiellement les conduits (2) d'un échangeur de chaleur dudit appareil (3), ladite calotte étant reliée à une seconde calotte (10), qui a une forme concave, pour loger au moins partiellement les conduits d'un évaporateur du même appareil (3), ladite première (1) et/ou seconde calotte (10) étant dotées de moyens de couplage hermétique (5, 11, 12) avec des parties (4) de l'appareil (3), afin de contenir les fluides qui peuvent être libérés par ces conduits (2).

2. Couvercle selon la revendication précédente, **caractérisé en ce que** lesdits moyens de couplage hermétique (5, 11, 12) comprennent des profils façonnés, qui sont disposés au moins le long du bord inférieur de la première (1) et/ou seconde (10) calotte et sont en mesure d'être insérés dans des cannelures complémentaires (6) agencées dans le couvercle (4) de l'échangeur de chaleur ou dans l'enveloppe dudit appareil (3).

3. Couvercle selon l'une des revendications précédentes, **caractérisé en ce que** la première calotte (1) présente sensiblement une forme de T.

4. Couvercle selon la revendication 4, **caractérisé en ce que** la partie transversale (1a) de la calotte en forme de T (1) couvre les zones d'entrée et de sortie des conduits (2) dans le couvercle (4) de l'échangeur de chaleur.

5. Couvercle selon la revendication 3 ou 4, **caractérisé en ce que** la partie longitudinale (1b) de la calotte en forme de T (1) couvre une section externe des conduits (2) et est inclinée vers le bas.

6. Couvercle selon l'une des revendications précédentes, **caractérisé en ce que** la seconde calotte (10) a une forme allongée et sinueuse.

7. Couvercle selon l'une des revendications précédentes, **caractérisé en ce que** le bord inférieur de la seconde calotte (10) comprend un conduit de drainage (13).

8. Couvercle selon l'une des revendications précédentes, **caractérisé en ce qu'**un cache (14) est fixé au dessus de la seconde calotte (10).

9. Couvercle selon l'une des revendications précédentes, **caractérisé en ce que** l'extrémité de la seconde calotte (10), opposée à la première calotte (1), est dotée d'un logement (15) en mesure de contenir au moins partiellement une soupape d'expansion (16) disposée le long des conduits de l'évaporateur.

10. Couvercle selon la revendication 9, **caractérisé en ce que** ledit logement (15) est relié à une bride (17), dotée d'un gabarit (18) en mesure de maintenir les extrémités des conduits (2) de l'échangeur de chaleur en position par rapport à la soupape d'expansion (16).

11. Couvercle selon l'une des revendications précédentes, **caractérisé en ce que** la première calotte (1), la seconde calotte (10) et/ou le cache (14) sont dotés de trous (7, 19) leur permettant d'être fixés au moyen de vis au couvercle (4) de l'échangeur de chaleur ou à d'autres parties de l'appareil (3).

12. Couvercle selon la revendication 11, **caractérisé en ce qu'**un ou plusieurs trous (7) sont agencés dans des brides (8) qui font saillie par la première calotte (1).

13. Couvercle selon la revendication 11 ou 12, **caractérisé en ce qu'**un ou plusieurs trous (7) sont agencés dans la première calotte (1) dans des positions comprises entre les conduits (2) de l'échangeur de chaleur.

14. Couvercle selon l'une des revendications précédentes, **caractérisé en ce que** la première calotte (1) et la seconde calotte.(10) sont reliées par une plaque de raccordement (9).

15. Couvercle selon l'une des revendications précédentes, **caractérisé en ce que** la première calotte (1), la seconde calotte (10), la plaque de raccordement (9), le cache (14) et/ou le logement (15) pour la soupape d'expansion (16) sont réalisés en une seule pièce de matière plastique moulée.

## Claims

1. Cover for pipes (2) of a heater, ventilation and refrigeration unit (3), **characterised in that** it comprises a first cap (1), concave in shape, able to accommodate at least partially the pipes (2) of an air heater of said device (3) and said cap being connected to a second cap (10), which is concave in shape, for accommodating at least partially the pipes of an evaporator of the same device (3), said first (1) and/or second (10) cap being provided with means (5, 11, 12) of hermetic coupling with parts (4) of the device (3), in order to contain the fluids that may be released by these pipes (2).

2. Cover according to the preceding claim, **characterised in that** said hermetic coupling means (5, 11, 12) comprise shaped profiles, which are disposed at least along the lower edge of the first (1) and/or second (10) cap and are able to be inserted in complementary grooves (6) arranged in the cover (4) of the air heater or in the casing of said device (3).

3. Cover according to one of the preceding claims, **characterised in that** the first cap (1) is substantially T-shaped.

4. Cover according to Claim 3, **characterised in that** the transverse part (1a) of the T-shaped cap (1) covers the areas of entry and exit of the pipes (2) in the cover (4) of the air heater.

5. Cover according to Claim 3 or 4, **characterised in that** the longitudinal part (1b) of the T-shaped cap (1) covers an external section of the pipes (2) and is inclined downwards.

6. Cover according to one of the preceding claims, **characterised in that** the second cap (10) has an elongated and winding shape.

7. Cover according to one of the preceding claims, **characterised in that** the lower edge of the second cap (10) comprises a drainage pipe (13).

8. Cover according to one of the preceding claims, **characterised in that** a shield (14) is fixed above the second cap (10).

9. Cover according to one of the preceding claims, **characterised in that** the end of the second cap (10), opposite to the first cap (1), is provided with a housing (15) able to contain at least partially an expansion valve (16) disposed along the pipes of the evaporator.

10. Cover according to Claim 9, **characterised in that** said housing (15) is connected to a flange (17), provided with a template (18) able to keep the ends of the pipes (2) of the air heater in position with respect to the expansion valve (16).

11. Cover according to one of the preceding claims, **characterised in that** the first cap (1), the second cap (10) and/or the shield (14) are provided with holes (7, 19) enabling them to be fixed by means of screws to the cover (4) of the air heater or to other parts of the device (3).

12. Cover according to Claim 11, **characterised in that** one or more holes (7) are arranged in flanges (8) that project from the first cap (1).

13. Cover according to Claim 11 or 12, **characterised in that** one or more holes (7) are arranged in the first cap (1) in positions lying between the pipes (2) of the air heater.

14. Cover according to one of the preceding claims, **characterised in that** the first cap (1) and the second cap (10) are connected by a connecting plate (9).

15. Cover according to one of the preceding claims, **characterised in that** the first cap (1), the second cap (10), the connecting plate (9), the shield (14) and/or the housing (15) for the expansion valve (16) are made in a single piece of moulded plastic.

## Patentansprüche

1. Deckel für Kanäle (2) eines Heiz-, Lüftungs- und Luftkühlgeräts (3), **dadurch gekennzeichnet, dass** er eine erste Kappe (1) mit konkaver Form umfasst, die in der Lage ist, zumindest teilweise die Kanäle (2) eines Wärmeaustauschers des Geräts (3) aufzunehmen, und wobei die Kappe mit einer zweiten Kappe (10) verbunden ist, die eine konkave Form aufweist, um zumindest teilweise die Kanäle eines Verdampfers desselben Geräts (3) aufzunehmen, wobei die erste (1) und / oder zweite Kappe (10) mit Mitteln zur hermetischen Verkoppelung (5, 11, 12) mit Teilen (4) des Geräts (3) ausgestattet sind, um die Flüssigkeiten einzuschließen, die von diesen Kanälen (2) freigesetzt werden können.

2. Deckel nach dem vorhergehenden Anspruch, **dadurch gekennzeichnet, dass** die Mittel zur hermetischen Verkoppelung (5, 11, 12) geformte Profile umfassen, die zumindest entlang des unteren Randes der ersten (1) und /oder zweiten (10) Kappe angeordnet und in der Lage sind, in komplementäre (6) Rillen eingefügt zu werden, die im Deckel (4) des Wärmeaustauschers oder im Gehäuse des Geräts (3) eingerichtet sind.

3. Deckel nach einem der vorhergehenden Ansprüche, **dadurch gekennzeichnet, dass** die erste Kappe (1) im Wesentlichen eine T-Form aufweist.

4. Deckel nach Anspruch 3, **dadurch gekennzeichnet, dass** der Querteil (1a) der Kappe in T-Form (1) die Eintritts- und Austrittsbereiche der Kanäle (2) im Deckel (4) des Wärmeaustauschers bedeckt.

5. Deckel nach Anspruch 3 oder 4, **dadurch gekennzeichnet, dass** der Längsteil (1b) der Kappe in T-Form (1) einen äußeren Abschnitt der Kanäle (2) bedeckt und nach unten geneigt ist.

6. Deckel nach einem der vorhergehenden Ansprüche, **dadurch gekennzeichnet, dass** die zweite Kappe (10) eine längliche und gewundene Form aufweist.

7. Deckel nach einem der vorhergehenden Ansprüche, **dadurch gekennzeichnet, dass** der untere Rand der zweiten Kappe (10) einen Dränagekanal (13) umfasst.

8. Deckel nach einem der vorhergehenden Ansprüche, **dadurch gekennzeichnet, dass** über der zweiten Kappe (10) eine Abdeckung (14) befestigt ist.

9. Deckel nach einem der vorhergehenden Ansprüche, **dadurch gekennzeichnet, dass** das Ende der zweiten Kappe (10), das der ersten Kappe (1) gegenüberliegt, mit einer Aufnahme (15) ausgestattet ist, die in der Lage ist, zumindest teilweise ein Expansionsventil (16) einzuschließen, das entlang der Kanäle des Verdampfers angeordnet ist.

10. Deckel nach Anspruch 9, **dadurch gekennzeichnet, dass** die Aufnahme (15) mit einem Flansch (17) verbunden ist, der mit einer Schablone (18) ausgestattet ist, die in der Lage ist, die Enden der Kanäle (2) des Wärmeaustauschers in Bezug auf das Expansionsventil (16) in Position zu halten.

11. Deckel nach einem der vorhergehenden Ansprüche, **dadurch gekennzeichnet, dass** die erste Kappe (1), die zweite Kappe (10) und / oder die Abdeckung (14) mit Löchern (7, 19) ausgestattet sind, die es ihnen ermöglichen, mittels Schrauben am Deckel (4) des Wärmeaustauschers oder an anderen Teilen des Geräts (3) befestigt zu werden.

12. Deckel nach Anspruch 11, **dadurch gekennzeichnet, dass** eines oder mehrere Löcher (7) in Flanschen (8) eingerichtet sind, die über die erste Kappe (1) vorragen.

13. Deckel nach Anspruch 11 oder 12, **dadurch gekennzeichnet, dass** eines oder mehrere Löcher (7) in der ersten Kappe (1) in Positionen, die sich zwischen den Kanälen (2) des Wärmeaustauschers befinden, eingerichtet sind.

14. Deckel nach einem der vorhergehenden Ansprüche, **dadurch gekennzeichnet, dass** die erste Kappe (1) und die zweite Kappe (10) durch eine Anschlussplatte (9) miteinander verbunden sind.

15. Deckel nach einem der vorhergehenden Ansprüche, **dadurch gekennzeichnet, dass** die erste Kappe (1), die zweite Kappe (10), die Anschlussplatte (9), die Abdeckung (14) und / oder die Aufnahme (15) für das Expansionsventil (16) aus einem einzigen Stück geformten Kunststoffes hergestellt sind.
